(19) **Europäisches Patentamt**
**European Patent Office**
**Office européen des brevets**

(11) **EP 1 832 328 A2**

(12) # EUROPÄISCHE PATENTANMELDUNG

(43) Veröffentlichungstag:
**12.09.2007 Patentblatt 2007/37**

(51) Int Cl.:
***B01D 53/04*** (2006.01)

(21) Anmeldenummer: **07003255.2**

(22) Anmeldetag: **15.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **09.03.2006 DE 10611031**

(71) Anmelder: **Linde Aktiengesellschaft**
**65189 Wiesbaden (DE)**

(72) Erfinder:
- **Leitmayr, Werner**
  **86633 Neuburg/Donau (DE)**
- **Müller, Ralf**
  **82438 Eschenlohe (DE)**

(74) Vertreter: **Zahn, Christoph**
**Linde AG**
**Patente und Marken**
**Dr.-Carl-von-Linde-Strasse 6-14**
**82049 Pullach (DE)**

(54) **TSA-Prozess**

(57) Es wird ein Verfahren zur Zerlegung eines wenigstens zweikomponentigen Rohgases mittels eines TSA-Prozesses, der wenigstens die Verfahrensschritte Adsorption und Regenerierung aufweist, wobei die Taktzeiten der einzelnen Verfahrensschritte auf einen Soll-Last-Wert des Rohgases ausgelegt sind, beschrieben.

Erfindungsgemäß wird bei einer Unterschreitung des Soll-Last-Wertes die Taktzeit wenigstens eines Verfahrensschrittes verlängert.

EP 1 832 328 A2

**Beschreibung**

Die Erfindung betrifft ein Verfahren zur Zerlegung eines wenigstens zweikomponentigen Rohgases mittels eines TSA-Prozesses, der wenigstens die Verfahrensschritte Adsorption und Regenerierung aufweist, wobei die Taktzeiten der einzelnen Verfahrensschritte auf einen Soll-Last-Wert des Rohgases ausgelegt sind.

Adsorptionsprozesse bzw. -verfahren, bei denen die Regenerierung des beladenen Adsorptionsmittels durch Temperaturerhöhung - und ggf. weitere, die Regenerierung des beladenen Adsorptionsmittels unterstützende Maßnahmen - erfolgt, werden als T(emperature)S(wing)A(dsorption)-Verfahren bezeichnet. Ein derartiges TSA-Verfahren ist bspw. aus der nicht vorveröffentlichten deutschen Patentanmeldung 10 2005 032 025 bekannt; mit der Zitierung dieser Patentanmeldung sei deren Offenbarungsgehalt zur Gänze in den Offenbarungsgehalt dieser Patentanmeldung integriert.

Bisher werden die Taktzeiten der einzelnen Verfahrensschritte - beispielsweise bei der Realisierung bzw. Festlegung des Steuerungsprogrammes eines TSA-Prozesses - auf einen bestimmten bzw. beabsichtigten Soll-Last-Wert des Rohgases ausgelegt. Die derart festgelegten Taktzeiten der einzelnen Verfahrensschritte werden dann - sofern dies erforderlich ist - ausschließlich mittels manueller Änderungen des Steuerungsprogrammes an die tatsächlichen Gegebenheiten angepasst.

Bei einer Vielzahl von TSA-Prozessen - insbesondere bei TSA-Prozessen, die in mehrstufigen Prozessen, wie bspw. der kryogenen CO- oder $C_2H_4$-Gewinnung. integriert sind - kommt es oftmals zu unvermeidbaren Änderungen bzw. Schwankungen des Soll-Last-Wertes des dem TSA-Prozess zugeführten Rohgases.

Aufgabe der vorliegenden Erfindung ist es, ein gattungsgemäßes Verfahren zur Zerlegung eines wenigstens zweikomponentigen Rohgases mittels eines TSA-Prozesses anzugeben, das es ermöglicht, diesen Änderungen bzw. Schwankungen des Soll-Last-Wertes-des Rohgases Rechnung zu tragen.

Zur Lösung dieser Aufgabe wird vorgeschlagen, dass bei einer Unterschreitung des Soll-Last-Wertes die Taktzeit wenigstens eines Verfahrensschrittes verlängert wird.

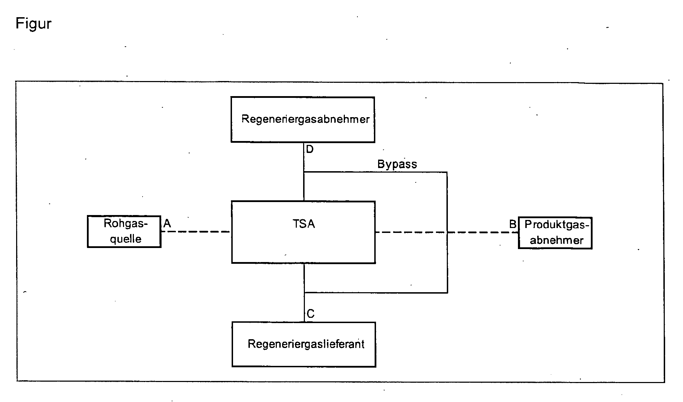

Zur Erläuterung der erfindungsgemäßen Verfahrensweise sei auf die Figur - die bereits in der vorgenannten deutschen Patentanmeldung 10 2005 032 025 gezeigt ist - verwiesen.

Diese zeigt in schematisierter Form ein TSA-Verfahren bzw. die Einbindung eines TSA-Verfahrens in einen beliebigen Prozess, wie er vorstehend erläutert wurde.

Unter dem Begriff "Rohgasquelle" sei jede beliebige Quelle für das dem TSA-Prozess zuzuführende Rohgas zu verstehen. Der Begriff "Produktgasabnehmer" umfasse auch beliebige weitere Verfahrensschritte, in denen das in dem TSA-Prozess gewonnene Produktgas einer beliebigen Weiterbehandlung unterworfen wird.

Unter dem in der Figur verwendeten Begriff "Regeneriergaslieferant" seien beliebige Quellen des Regeneriergases zu verstehen. Hierbei kann als Regeneriergas ein Teil des Produkt- und/oder Rohgases verwendet werden; es kann aber auch aus einer unabhängigen ("externen") Gasquelle stammen.

Der in der Figur verwendete Begriff "Regeneriergasabnehmer" umfasse jeden beliebigen Empfänger des zum Regenerieren des bzw. der Adsorber des TSA-Prozesses verwendeten Gases. Dies kann z. B eine Fackel, ein Brenner oder ein anderer Apparat sein.

Mittels der erfindungsgemäßen Verfahrensweise wird nunmehr erreicht, dass auch bei einer Unterlast die Schwankungen der Verfahrensströme an den Punkten B und D - also die Schwankungen des Produktgases sowie des aus dem TSA-Prozess abgezogenen Regeneriergases - sowie die Temperaturschwankung des Produktgases am Punkt B minimiert werden können, da durch die zeitliche Streckung der Taktzeiten auch die Möglichkeit der Reduzierung der Temperaturen und/oder Mengenströme der einzelnen Verfahrensschritte möglich wird und trotzdem z. B. der integrale Wärmeeintrag beim Heizen unverändert bleibt.

Weitere vorteilhafte Ausgestaltungen des erfindungsgemäßen Verfahrens sind dadurch gekennzeichnet, dass

- bei einer Unterschreitung des Soll-Last-Wertes die Taktzeiten aller Verfahrensschritte verlängert werden,
- die Verlängerung der Taktzeit wenigstens eines Verfahrensschrittes proportional zur Unterschreitung der Soll-Last erfolgt,
- die Taktzeit wenigstens eines Verfahrensschrittes gemäß folgender Formel festgelegt wird:

$$\text{Taktzeit\_ak} = \text{Taktzeit\_de} * \text{F\_Last} * \text{F\_PT} * \text{F\_OP} * \text{F\_Alt}$$

wobei
Taktzeit_ak die festzulegende Taktzeit,
Taktzeit_de die an der Soll-Last ausgerichtete Taktzeit,
F_Last die Last (wobei Last = vorgegebene Rohgasmenge / aktuelle gemittelte Rohgasmenge),

F_PT die Rohgasbedingungen,
F_OP die Vorgabe des Bedienpersonals und
F_Alt den Alterungszustand des Adsorptionsmittels bezeichnet.

Unter dem vorerwähnten Begriff "Rohgasbedingungen" seien insbesondere die Parameter Druck und Temperatur zu verstehen.
In der vorgenannten Formel kann das Bedienpersonal alle oder einzelne Taktzeiten durch die Eingabe einer Zahl proportional in bestimmten Grenzen verändern.
Sofern - gemäß einer weiteren vorteilhaften Ausgestaltung des erfindungsgemäßen Verfahrens - wenigstens eine in einer Konzentration von weniger als 2 Vol.-% vorkommende Komponente (Spurenkomponente) aus dem wenigstens zweikomponentigen Rohgas entfernt wird, wird die Taktzeit wenigstens eines Verfahrensschrittes gemäß fol-gender Formel festgelegt:

$$\text{Taktzeit\_ak} = \text{Taktzeit\_de} * \text{F\_Last} * \text{F\_PT} * \text{F\_OP} * \text{F\_Alt} * \text{F\_Sp}$$

wobei
Taktzeit_ak die festzulegende Taktzeit,
Taktzeit_de die an der Soll-Last ausgerichtete Taktzeit,
F_Last die Last (wobei Last = vorgegebene Rohgasmenge / aktuelle gemittelte Rohgasmenge),
F_PT die Rohgasbedingungen,
F_OP die Vorgabe des Bedienpersonals,
F_Alt den Alterungszustand des Adsorptionsmittels und
F_Sp den Gehalt der Spurenkomponenten bezeichnet.
Der Gehalt an Spurenkomponenten wird durch eine Analyse des Rohgases und/oder aufgrund der Kenntnis der Dampfdruckkurve bei gesättigten Spurenkomponenten bestimmt.
Darüber hinaus kann als weitere Optimierung des erfindungsgemäßen Verfahrens eine kontinuierliche Überwachung der absoluten Menge der in den Adsorber eingetragenen Spurenkomponente(n) realisiert werden. Diese Menge kann aus dem Gehalt der Spurenkomponente(n) im Rohgas, dem Rohgasstrom und der Adsorptionszeit rechnerisch bestimmt werden.
Das erfindungsgemäße Verfahren weiterbildend wird ferner vorgeschlagen, dass

- die Berechnung der Taktzeit adaptiv erfolgt,
- wobei die Taktzeit durch einen Zählerstand ersetzt wird (Zählerstand_de = Taktzeit_de),
- und der aktuelle Zählerstand gemäß folgender Formel festgelegt wird:

$$Z\ddot{a}hlerstand\_ak = \sum_{i=0}^{n} F\_Last_i * F\_PT_i * F\_OP_i * F\_Alt_i * F\_SP_i * \Delta t_{i-1}$$

wobei
Zählerstand_ak den aktuellen Zählerstand,
Zählerstand_de den an der Soll-Last ausgerichteten Zählerstand,
F_Last die Last (wobei Last = vorgegebene Rohgasmenge / aktuelle gemittelte Rohgasmenge),
F_PT die Rohgasbedingungen,
F_OP die Vorgabe des Bedienpersonals,
F_Alt den Alterungszustand des Adsorptionsmittels,
F_Sp den Gehalt der Spurenkomponenten und
$\Delta t_{i-1}$ die Zeitdifferenz zwischen der letzten und aktuellen Berechnung bezeichnet, und
wobei das Taktende dann erreicht ist, wenn gilt:
Zählerstand ak=Zählerstand de.

Mit der Kenntnis der eingetragenen Menge pro Spurenkomponente und der Adsorberkapazität kann ein Überladen bzw. Überfahren des Adsorbers durch ein rechtzeitiges Beenden des Adsorptionsschrittes verhindert werden. Eine Schädigung des Adsorbens oder nachfolgender Prozessschritte bzw. Anlagenteile kann somit wirkungsvoll verhindert werden.

Das erfindungsgemäße Verfahren zur Zerlegung eines wenigstens zweikomponentigen Rohgases mittels eines TSA-Prozesses weiterbildend wird vorgeschlagen, dass bei einer Unterschreitung des Soll-Last-Wertes, neben der Verlängerung der Taktzeit wenigstens eines Verfahrensschrittes, eine Veränderung des Sollwertes der Temperatur und/ oder des Sollwertes des oder der Mengenströme erfolgt.

**Patentansprüche**

1.  Verfahren zur Zerlegung eines wenigstens zweikomponentigen Rohgases mittels eines TSA-Prozesses, der wenigstens die Verfahrensschritte Adsorption und Regenerierung aufweist, wobei die Taktzeiten der einzelnen Verfahrensschritte auf einen Soll-Last-Wert des Rohgases ausgelegt sind, **dadurch gekennzeichnet, dass** bei einer Unterschreitung des Soll-Last-Wertes die Taktzeit wenigstens eines Verfahrensschrittes verlängert wird.

2.  Verfahren nach Anspruch 1, **dadurch gekennzeichnet, dass** bei einer Unterschreitung des Soll-Last-Wertes die Taktzeiten aller Verfahrensschritte verlängert werden.

3.  Verfahren nach Anspruch 1 oder 2, **dadurch gekennzeichnet, dass** die Verlängerung der Taktzeit wenigstens eines Verfahrensschrittes proportional zur Unterschreitung der Soll-Last erfolgt.

4.  Verfahren nach einem der vorhergehenden Ansprüche 1 bis 3, **dadurch gekennzeichnet, dass** die Taktzeit wenigstens eines Verfahrensschrittes gemäß folgender Formel festgelegt wird:

$$Taktzeit\_ak = Taktzeit\_de * F\_Last * F\_PT * F\_OP * F\_Alt$$

wobei
Taktzeit_ak die festzulegende Taktzeit,
Taktzeit_de die an der Soll-Last ausgerichtete Taktzeit,
F_Last die Last (wobei Last = vorgegebene Rohgasmenge / aktuelle gemittelte Rohgasmenge),
F_PT die Rohgasbedingungen,
F_OP die Vorgabe des Bedienpersonals und
F _Alt den Alterungszustand des Adsorptionsmittels bezeichnet.

5.  Verfahren nach einem der vorhergehenden Ansprüche 1 bis 4, wobei wenigstens eine in einer Konzentration von weniger als 2 Vol.-% vorkommende Komponente (Spurenkomponente) aus dem wenigstens zweikomponentigen Rohgas entfernt wird, **dadurch gekennzeichnet, dass** die Taktzeit wenigstens eines Verfahrensschrittes gemäß folgender Formel festgelegt wird:

$$Taktzeit\_ak = Taktzeit\_de * F\_Last * F\_PT * F\_OP * F\_Alt * F\_Sp$$

wobei
Taktzeit_ak die festzulegende Taktzeit,
Taktzeit_de die an der Soll-Last ausgerichtete Taktzeit,
F_Last die Last (wobei Last = vorgegebene Rohgasmenge / aktuelle gemittelte Rohgasmenge),
F_PT die Rohgasbedingungen,
F_OP die Vorgabe des Bedienpersonals,
F_Alt den Alterungszustand des Adsorptionsmittels und
F_Sp den Gehalt der Spurenkomponenten bezeichnet.

6.  Verfahren nach einem der vorhergehenden Ansprüche 1 bis 5, **dadurch gekennzeichnet, dass**

    - die Berechnung der Taktzeit adaptiv erfolgt,
    - wobei die Taktzeit durch einen Zählerstand ersetzt wird (Zählerstand-de = Taktzeit_de),
    - und der aktuelle Zählerstand gemäß folgender Formel festgelegt wird:

$$Z\ddot{a}hlerstand\_ak = \sum_{i=0}^{n} F\_Last_i * F\_PT_i * F\_OP_i * F\_Alt_i * F\_SP_i * \Delta t_{i-1}$$

wobei

Zählerstand_ak den aktuellen Zählerstand,

Zählerstand_de den an der Soll-Last ausgerichteten Zählerstand,

F_Last die Last (wobei Last = vorgegebene Rohgasmenge / aktuelle gemittelte Rohgasmenge),

F_PT die Rohgasbedingungen,

F_OP die Vorgabe des Bedienpersonals,

F_Alt den Alterungszustand des Adsorptionsmittels,

F_Sp den Gehalt der Spurenkomponenten und

$\Delta t_{i-1}$ die Zeitdifferenz zwischen der letzten und aktuellen Berechnung bezeichnet, und

wobei das Taktende dann erreicht ist, wenn gilt: Zählerstand_ak=Zählerstand_de.

**7.** Verfahren nach einem der vorhergehenden Ansprüche 1 bis 6, **dadurch gekennzeichnet, dass** bei einer Unterschreitung des Soll-Last-Wertes, neben der Verlängerung der Taktzeit wenigstens eines Verfahrensschrittes, eine Veränderung des Sollwertes der Temperatur und/oder des Sollwertes des oder der Mengenströme erfolgt.

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005032025